# EUROPÄISCHE PATENTANMELDUNG

(11) **EP 0 766 483 A2**
(43) Veröffentlichungstag der Anmeldung: **02.04.1997**
(21) Anmeldenummer: 96113454.1
(22) Anmeldetag: 22.08.1996
(51) Int. Cl.: H04Q 1/14, H01R 9/00

(54) **Erdungsbügel, insbesondere zur Verwendung in einer Anschlusseinrichtung für die Fernmelde- und Datentechnik**

(30) Priorität: 29.09.1995 DE 29515982 U
(71) Anmelder: KRONE Aktiengesellschaft, D-14167 Berlin (DE)
(72) Erfinder: Ferenc, Nad, Dipl.-Ing., 14199 Berlin (DE)

(57) **Zusammenfassung**

Die Erfindung betrifft einen Erdungsbügel, insbesondere zur Verwendung in einer Anschlußeinrichtung für die Fernmelde- und Datentechnik, die insbesondere auf eine Hutschiene als Tragschiene aufgebracht ist.

Die Aufgabe der Erfindung, einen leicht austauschbaren Erdungsbügel für Anschlußeinrichtungen der genannten Art zu entwickeln, mit dem in einfacher Weise unterschiedliche Erdungsaufgaben gelöst werden können, wurde dadurch gelöst, daß Federelemente 12 zur federnden Rastung in die Hutschiene 19, eine aus dem Bügelgrund 13 herausgebogene Kontaktlasche 11 sowie Befestigungselemente 6,7,14,15,5,9 zur sicheren Fixierung am Boden 27 der Anschlußeinrichtung 17 der Fernmelde- und Datentechnik vorgesehen sind.

## Beschreibung

Die Erfindung bezieht sich auf einen Erdungsbügel, insbesondere zur Verwendung in einer Anschlußeinrichtung für die Fernmelde- und Datentechnik gemäß dem Oberbegriff des Anspruches 1.

Aus der DE 37 38 322 C2 ist eine Anschlußleiste bekannt, die aus einem Basiselement besteht, welches über federnde Rastelemente auf einer Tragschiene angeordnet ist. In dem Basiselement ist eine Aufnahmeöffnung für ein Verbinderelement vorgesehen. In der Tragschiene ist eine u-förmige Erdschiene eingebracht. Der im Steckerteil eines Verbindungsteiles vorgesehene federnde Erdkontakt kommt mit der Erdschiene in Kontakt, so daß eine Erdleitung des Verbindungsteiles elektrisch mit der Tragschiene verbunden ist. Da die Tragschiene auf einem Gestell montiert ist, wird das Erdpotential über das Gestell abgeleitet. Diese Form der Erdung bedingt eine Erdschiene in der Tragschiene auch in Abschnitten, wo diese nicht benötigt wird. Die Erdschiene ist durch ihre spezielle Form schwer austauschbar und ohne Werkzeug nicht lösbar.

Ziel dieser beschriebenen Konstruktion ist es, Erweiterungs- und Verkleinerungsmöglichkeiten für Anschlußleisten zu schaffen, ohne die elektrischen Verbindungen zwischen den Teilleisten zu verschlechtern. Die Anschlußleisten ermöglichen jedoch nicht, verschiedene Anschlußmöglichkeiten aus Funktionsbausteinen zu kombinieren, z.B. dicke und dünne Kabeladern in einem Anschluß zu realisieren oder unterschiedliche Schutzschaltungen anzuwenden, die jeweils ihre gesonderte Erdungseinrichtung aufweisen.

Der Erfindung liegt von daher die Aufgabe zugrunde, einen leicht austauschbaren Erdungsbügel für Anschlußeinrichtungen, die insbesondere auf eine Hutschiene aufgebracht sind, zu entwickeln, mit dem in einfacher Weise unterschiedliche Erdungsaufgaben gelöst werden können.

Die Lösung dieser Aufgabe ergibt sich aus den kennzeichnenden Merkmalen des Anspruches 1.

Der Erdungsbügel gewährleistet die zuverlässige und leicht zu lösende Erdung von einzelnen Funktionsbausteinen einer Anschlußeinrichtung der Fernmelde- und Datentechnik über die verwendete Tragschiene oder wahlweise über eine anzuschließende Erdungsleitung.

Weitere vorteilhafte Ausgestaltungen der Erfindung ergeben sich aus den Unteransprüchen.

Die Erfindung ist nachfolgend anhand eines in den Zeichnungen dargestellten Ausführungsbeispiels eines Erdungsbügels näher erläutert. Es zeigen:
- Fig. 1: die Abwicklung des Erdungsbügels in einer ersten Ausführungsform,
- Fig. 2: eine Seitenansicht des Erdungsbügels gemäß Fig.1,
- Fig. 3: die Draufsicht auf den Erdungsbügel gemäß den Fig. 1,2,
- Fig. 4: die perspektivische Darstellung einer Anschlußeinrichtung,
- Fig. 5: die Unteransicht auf das Basiselement der Anschlußeinrichtung nach Fig. 4,
- Fig. 6: die perspektivische Darstellung des Erdungsbügels in einer zweiten Ausführungsform,
- Fig. 7: die perspektivische Darstellung des Erdungsbügels in einer dritten Ausführungsform,
- Fig. 8: die Unteransicht einer Zusatzfeder,
- Fig. 9: die Draufsicht der Zusatzfeder nach Fig. 8,
- Fig. 10: die perspektivische Darstellung des Basiselementes und der Zusatzfeder und
- Fig. 11: die Draufsicht auf das Basisteil und die Zusatzfeder.

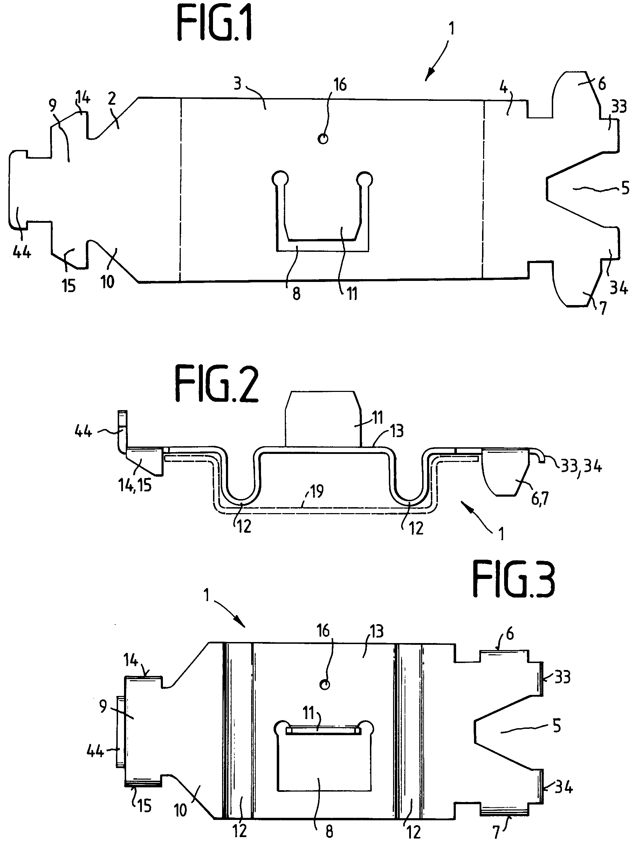

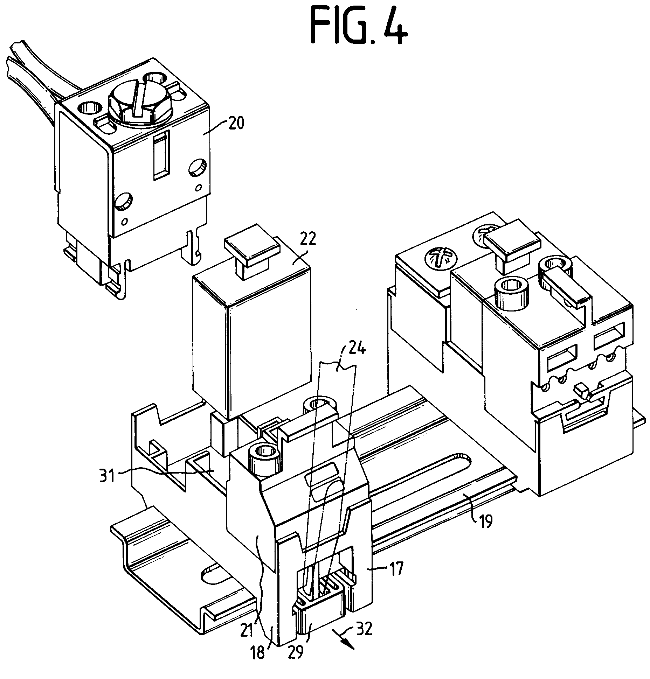

Die Fig. 1 zeigt die Abwicklung eines Erdungsbügels 1 zur Anwendung bei Anschlußeinrichtungen in der Fernmelde- und Datentechnik, die auf eine Hutschiene 19 (Fig. 4) aufgebracht sind. Mittels des Erdungsbügels 1 wird eine elektrisch leitende Verbindung zwischen der Anschlußeinrichtung und der Hutschiene 19 als Tragschiene hergestellt.

Der Erdungsbügel 1 wird entsprechend der Darstellung in der Fig. 1 aus einem Blechstreifen gebildet, der im wesentlichen einen Bereich 4 mit einer v-förmigen Ausnehmung 5 und mit Rastflächen 6,7, einen Bereich 3 mit einem Freischnitt 8, aus dem eine Kontaktlasche 11 herausgebogen ist, und einen Bereich 2 mit zwei kegelstumpfförmigen Abschnitten 9,10 aufweist.

Aus den Fig. 2,3 ist die Gestaltung des Erdungsbügels 1 als Bauelement ersichtlich. Die Rastflächen 6,7 sind vom Bügelgrund 13 rechtwinklig nach unten abgebogen. Die Kontaktlasche 11 ist aus dem Freischnitt 8 rechtwinklig nach oben herausgebogen, wobei rechts und links vom Freischnitt 8 u-förmige Federelemente 12 aus dem Bügelgrund 13 nach unten herausgeformt sind, deren Abstand zueinander der Innenweite der für die Aufrastung der Anschlußeinrichtung verwendeten genormten Hutschiene 19 entspricht. Die Rastflächen 14,15 des Abschnitts 9 sind ebenfalls rechtwinklig nach unten aus dem Abschnitt 9 herausgebogen. Eine Bohrung 16 im Bügelgrund 13 kann vorgesehen sein, um z.B. eine nicht dargestellte gesonderte Erdungsleitung anzuschließen.

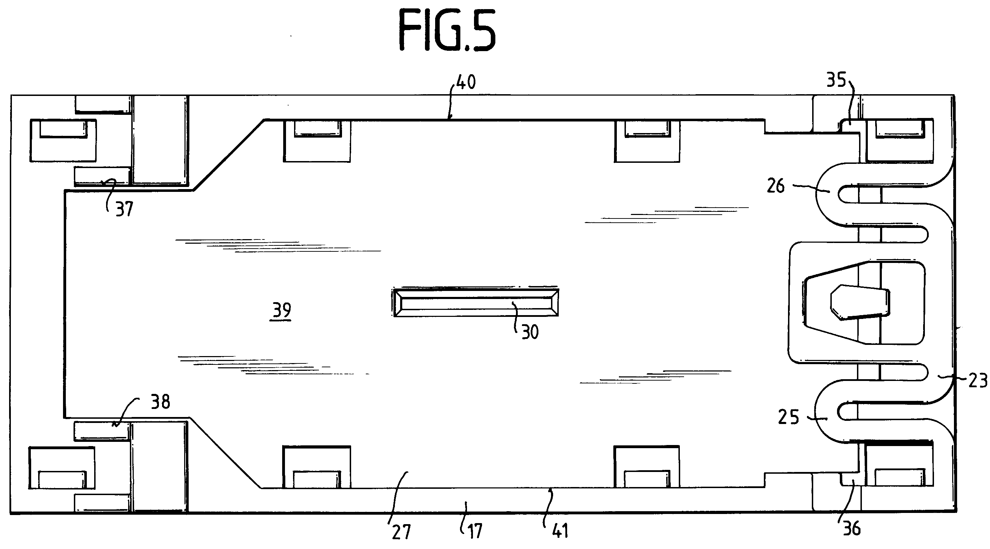

Der Erdungsbügel 1 ist mit seinen Befestigungselementen, die aus den Rastflächen 6,7,14,15, der Ausnehmung 5, dem Abschnitt 9 gebildet sind, an die Geometrie des Bodens 27 des Basiselementes 17 der Anschlußeinrichtung angepaßt und wird in den Boden 27 des Basiselementes 17 eingerastet. Hierzu ist an der Stirnseite des Erdungsbügels 1 eine Rastlasche 44 vorgesehen. Dabei durchstößt die Kontaktlasche 11 des Erdungsbügels 1 eine Öffnung 30 im Boden 27 des Basiselementes 17 und ragt in eine darüberliegende Kammer 31 des Basiselementes 17, in welche z.B. ein Überspannungsschutz-Stecker als Funktionsbaustein 22 gesteckt wird (Fig.4,5).

Anschlußeinrichtungen bilden eine Schnittstelle zwischen einem Teilnehmer und einer Vermittlungsstelle in einem Fernmelde- oder Datennetz.

Die im Beispiel dargestellte Anschlußeinrichtung weist entsprechend der Darstellung in der Fig. 4 das Basiselement 17 auf, welches über Rastelemente 18 auf die Tragschiene 19, hier in Form einer genormten Hutschiene, aufgerastet ist.

Auf das Basiselement 17 können Anschlußelemente 20,21 und Funktionsbausteine 22 in Aufnahmen des Basiselementes 17 eingebracht sein. Die Funktionsbausteine 22 sind jeweils zwischen die Anschlußelemente 20,21 in die Kammer 31 des Basiselementes 17 eingebracht.

Ein Funktionsbaustein 22 kann je nach Anwendung z.B. als Überspannungsschutz ausgebildet sein.

Das Basiselement 17 weist entsprechend der Darstellung in der Fig. 5 ein angeformtes Federelement 23 auf, welches über die Hutschiene 19 rastet und mit einem Schraubendreher 24 ( Fig. 4) oder sonstigem geeigneten Gegenstand entriegelt wird, um das auf der Hutschiene 19 eingerastete Basiselement 17 zu entnehmen. In das Basiselement 17 kann sodann bei entsprechendem Bedarf der Erdungsbügel 1 eingebracht oder herausgelöst werden.

Das Federelement 23 (Fig. 5) dient der Halterung des Basiselementes 17 auf der Hutschiene 19. Das Federelement 23 ist gemäß der Darstellung in der Fig. 5 über zwei elastische Wellenelemente 25,26 am Boden 27 des Basiselementes 17 angeformt (Fig. 5). Durch Einstecken des Schraubendrehers 24 in eine Öffnung 22 des Basiselementes 17 und Ankippen des Schraubendrehers 24 wird ein Halteelement 29 im Basiselement 17 in Pfeilrichtung 32 bewegt und entrastet das Basiselement 17 von der Hutschiene 19 (siehe Fig. 4). Der Erdungsbügel 1 wird mit den Flächen 33,34 (Fig. 1,3) und der Ausnehmung 5 unter das Federelement 23 des Basiselementes 17 geschoben, so daß die Rastflächen 6,7 (Fig. 1 bis 3) jeweils in die Kammern 35,36 ragen und sich dort abstützen. Die Rastflächen 14,15 des Erdungsbügels 1 stützen sich an den Flächen 37,38 (Fig. 5) des Bodens 27 des Basiselementes 17 ab. Insgesamt füllt der Erdungsbügel 1 etwa die durch die Kanten 40,41 begrenzte Fläche des Bodens 27 aus, wobei die Kanten 40,41 ebenfalls Führungsflächen für den Erdungsbügel 1 bilden.

In das Basiselement 17 können zwei nicht dargestellte Kontaktbahnen in Schlitze eingesetzt sein, über welche die elektrische Verbindung zwischen den eingesteckten Anschlußelementen 20,21 und dem jeweils eingesteckten Funktionsbaustein 22 hergestellt wird. Die Kontaktbahnen sind im Mittelbereich des Basiselementes 17 geführt. Die Kontaktlasche 11 des Erdungsbügels 1 ragt zwischen den Kontaktbahnen in das Innere des Basiselementes 17 hinein.

Der in der Fig. 4 dargestellte Funktionsbaustein 22 ist als in das Basiselement 17 einsteckbarer Überspannungsschutz mittels eines nicht dargestellten Überspannungsableiters zum Schutz der Leitungen ausgestaltet. Der Funktionsbaustein 22 kontaktiert, wie bereits beschrieben, mit seinen Kontakten die Kontaktlasche 11 des in das Basiselement 17 eingebrachten Erdungsbügels 1. Über die Bohrung 16 des Erdungsbügels 1, z.B. eine Gewindebohrung, kann wahlweise eine nicht dargestellte Erdungsleitung angeschlossen werden.

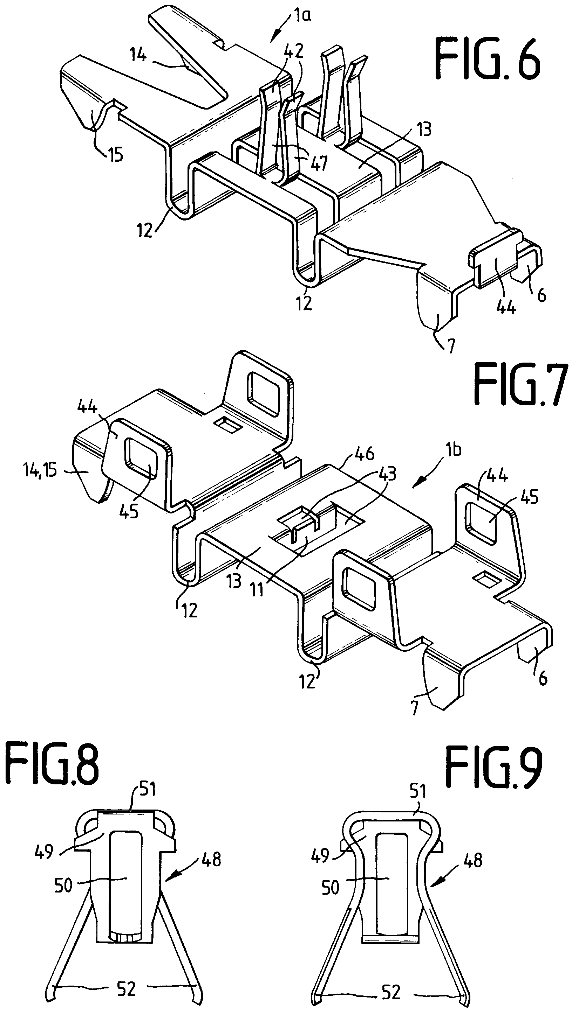

Der in der Fig. 6 dargestellte Erdungsbügel 1a in einer zweiten Ausführungsform ist mit zwei Gabelkontakten 42 ausgebildet. Die beiden Kontaktzungen 47 sind aus dem Bügelgrund 13 rechtwinklig nach oben herausgebogen. Wie im ersten Ausführungsbeispiel durchstoßen die Gabelkontakte 42 eine nicht dargestellte Öffnung im Boden 27 des Basiselementes 17 und ragen in eine darüberliegende Kammer 31 des Basiselementes 17. In die Gabelkontakte 42 können somit Kontaktlaschen eingesteckt werden, die zum Beispiel mit einem Überspannungsschutz-Stecker oder mit Schneid-Klemm-Kontakten verbunden sind.

Der in der Fig. 7 dargestellte Erdungsbügel 1b der dritten Ausführungsform ist wie die erste Ausführungsform des Erdungsbügels 1 mit einer Kontaktlasche 11 versehen. Die Kontaktlasche 11 ist vom Bügelgrund 13 rechtwinklig nach unten abgebogen. Beidseitig der Kontaktlaschen 11 sind Freischnitte 43 vorgesehen. Über die Kontaktlaschen 11 ist ein nicht dargestellter Gabelkontakt aufrastbar, der eine Öffnung 30 im Boden des Basiselementes 17 durchstößt und mit einem Überspannungsschutz-Stecker oder mit einer im Basiselement 17 befindlichen Erdschiene verbunden ist. Auch hier sind Rastlaschen 44 mit Öffnungen 45 vorgesehen, die durch Öffnungen (nicht dargestellt) im Boden 27 des Basiselementes 17 stoßen und über im Boden 27 befindliche nicht dargestellte Rastnocken eine mechanische Verbindung zwischen dem Basiselement 17 und dem Erdungsbügel 1b herstellen. Der Erdungsbügel 1b ist somit lagesicher am Basiselement 17 fixiert.

In den Fig. 8 und 9 ist eine Zusatzfeder 48 dargestellt. Die Zusatzfeder 48 besteht aus einem rechtwinklig geformten Basisteil 49 mit einer Schlitzaufnahme 50. An der Stirnseite des Basisteiles 49 ist ein U-förmiges Federelement 51 mit zwei Federarmen 52 angeformt. Die Federarme 52 befinden sich somit beidseitig der Schlitzaufnahme 50.

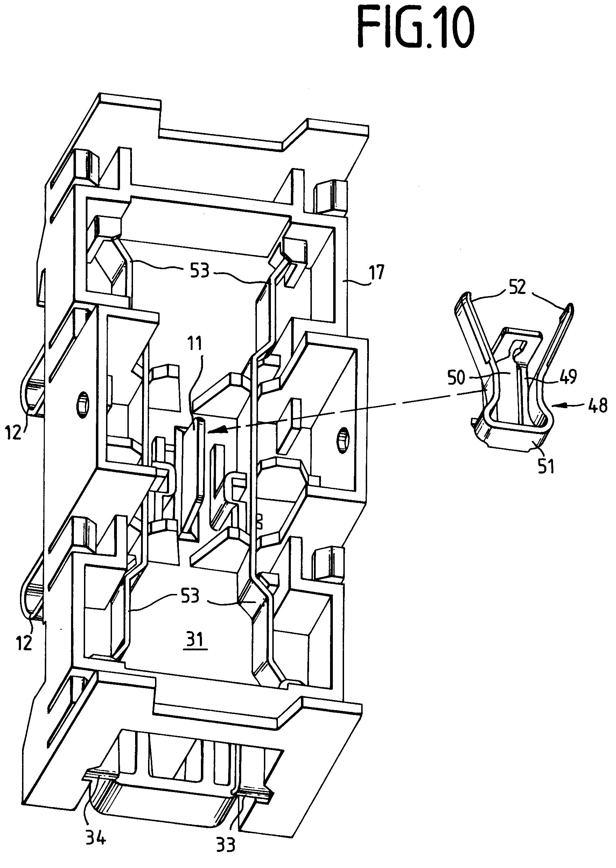

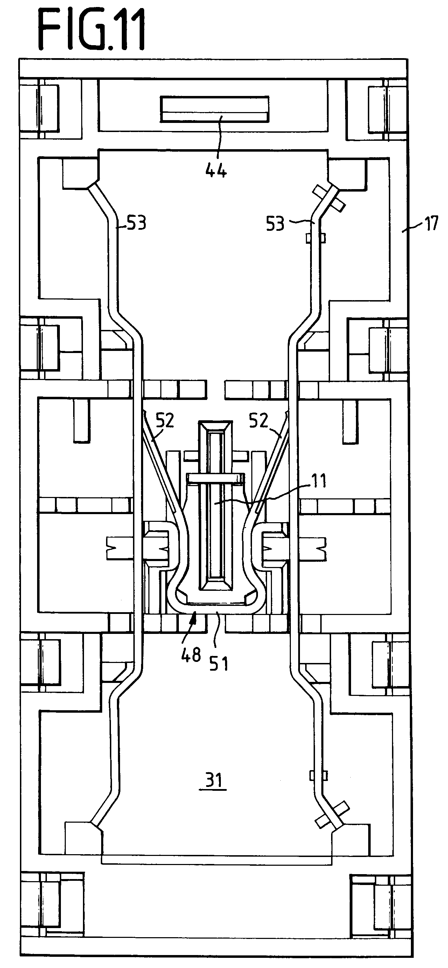

Wie in den Fig. 10 und 11 dargestellt ist, wird die Zusatzfeder 48 (in der Kammer 31 des Basiselementes 17) auf die Kontaktlasche 11 des Erdungsbügels 1 aufgesteckt. Hierbei wird die Kontaktlasche 11 in die Schlitzaufnahme 50 eingesteckt und stellt somit eine elektrische Verbindung zwischen dem Erdungsbügel 1 und der Zusatzfeder 48 her.

Die Federarme 52 der Zusatzfeder 48 liegen hierbei an zwei Kontaktschienen 53 an, die parallel zueinander in der Kammer 31 des Basiselementes 17 angeordnet sind. Die Zusatzfeder 48 verbindet somit die beiden Kontaktschienen 53 miteinander bzw. stellt einen Kurzschluß zwischen den Kontaktschienen 53 her. Durch Einstecken des in der Fig. 4 dargestellten Funktionsbausteins 22 werden die Federarme 52 der Zusatzfeder 48 durch nicht dargestellte Trennelemente von den Kontaktschienen 53 abgehoben, die elektrische Verbindung bzw. der Kurzschluß wird aufgehoben. Die Kontaktschienen 53, die jeweils mit der a- und b-Ader einer Fernmeldeleitung verbunden sind, werden somit bei gezogenem Funktionselement 22 über den Erdungsbügel 1 auf Erde gelegt.

### BEZUGSZEICHENLISTE

- 01,1a,1b: Erdungsbügel
- 02: Bereich
- 03: Bereich
- 04: Bereich
- 05: Ausnehmung
- 06: Rastfläche
- 07: Rastfläche
- 08: Freischnitt
- 09: Abschnitt
- 10: Abschnitt
- 11: Kontaktlasche
- 12: Federelement
- 13: Bügelgrund
- 14: Rastfläche
- 15: Rastfläche
- 16: Bohrung
- 17: Basiselement
- 18: Rastelement
- 19: Tragschiene
- 20: Anschlußelement
- 21: Anschlußelement
- 22: Funktionsbaustein
- 23: Federelement
- 24: Schraubendreher
- 25: Wellenelement
- 26: Wellenelement
- 27: Boden
- 28: Öffnung
- 29: Halteelement
- 30: Öffnung
- 31: Kammer
- 32: Pfeilrichtung
- 33: Fläche
- 34: Fläche
- 35: Kammer
- 36: Kammer
- 37: Fläche
- 38: Fläche
- 39: Fläche
- 40: Kante
- 41: Kante
- 42: Gabelkontakt
- 43: Freischnitt
- 44: Rastlasche
- 45: Öffnung
- 46: Längsseite
- 47: Kontaktzunge
- 48: Zusatzfeder
- 49: Basisteil
- 50: Schlitzaufnahme
- 51: Federelement
- 52: Federarm
- 53: Kontaktschiene

## Patentansprüche

1. Erdungsbügel, insbesondere zur Verwendung in einer Anschlußeinrichtung für die Fernmelde- und Datentechnik, die insbesondere auf eine Hutschiene als Tragschiene aufgebracht ist,
**dadurch gekennzeichnet,** daß
Federelemente (12) zur federnden Rastung in die Hutschiene (19), eine aus dem Bügelgrund (13) herausgebogene Kontaktlasche (11) sowie Befestigungselemente (6,7,14,15,5,9) zur sicheren Fixierung am Boden (27) der Anschlußeinrichtung (17) der Fernmelde- und Datentechnik vorgesehen sind.

2. Erdungsbügel nach Anspruch 1, dadurch gekennzeichnet, daß die Federelemente (12) durch zwei u-förmige Ausformungen und die Kontaktlasche (11) durch Freischnitt aus dem Bügelgrund (13) gebildet sind.

3. Erdungsbügel nach den Ansprüchen 1 und 2, dadurch gekennzeichnet, daß die Federelemente (12) eng an die Hutschiene (19) anliegend angeordnet sind und die Kontaktlasche (11) zwischen beiden Federelementen (12) angeordnet ist.

4. Erdungsbügel nach Anspruch 1, dadurch gekennzeichnet, daß die Geometrie des Erdungsbügels (1) an die Geometrie der Bodenfläche (27) der Anschlußeinrichtung (17) angepaßt und in diese eingerastet ist.

5. Erdungsbügel nach Anspruch 1, dadurch gekennzeichnet, daß an die Kontaktlasche (11) eine Anschlußmöglichkeit (16) für eine Erdungsleitung vorgesehen ist.

6. Erdungsbügel nach Anspruch 1, dadurch gekennzeichnet, daß die Kontaktlasche (11) als Gabelkontakt (42) ausgebildet ist.

7. Erdungsbügel nach Anspruch 1, dadurch gekennzeichnet, daß im Bügelgrund (13) beidseitig der Kontaktlasche (11) Freischnitte (43) vorgesehen sind.

8. Erdungsbügel nach den Ansprüchen 1 und 7, dadurch gekennzeichnet, daß an den Längsseiten (46) Rastlaschen (44) mit Öffnungen (45) vorgesehen sind.

9. Erdungsbügel nach Anspruch 1, dadurch gekennzeichnet, daß eine Zusatzfeder (48) über die Kontaktlasche (11) des Erdungsbügels (1) aufsteckbar ist.

10. Erdungsbügel nach Anspruch 9, dadurch gekennzeichnet, daß die Zusatzfeder (48) Federarme (52) aufweist, die die im Basiselement (17) angeordneten Kontaktschienen (53) elektrisch miteinander verbinden.
